# FASCICULE DE BREVET EUROPEEN

(11) **EP 1 961 223 B1**
(45) Date de publication et mention de la délivrance du brevet: **27.03.2013**
(21) Numéro de dépôt: 06792902.6
(22) Date de dépôt: 18.08.2006
(51) Int. Cl.: H04N 21/4623

(54) **PROCEDE DE CONTROLE D'ACCES A UN CONTENU EMBROUILLE**
VERFAHREN ZUM REGELN DES ZUGRIFFS AUF VERWÜRFELTEN INHALT
METHOD OF CONTROLLING ACCESS TO A SCRAMBLED CONTENT

(30) Priorité: 13.12.2005 FR 0553852; 31.03.2006 FR 0651130
(43) Date de publication de la demande: 27.08.2008
(73) Titulaire: Viaccess, 92057 Paris La Défense Cedex (FR)
(72) Inventeur: CHEVALLIER, Anthony, F-78210 SAINT CYR L'ECOLE (FR); LANFRANCHI, Stéphane, F-75012 Paris (FR); MAGIS, Erwann, F-75017 Paris (FR)
(74) Mandataire: Ilgart, Jean-Christophe
(86) Numéro de dépôt international: PCT/EP2006/065459
(87) Numéro de publication internationale: WO 2007/068507

(56) Documents cités:
- EP-A- 1 422 943
- EP-A- 1 439 697
- WO-A-03/105475
- US-A1- 2002 092 016
- US-A1- 2004 088 175
- CUNNINGHAM D ET AL: "Secure pay-per-view testbed" PROCEEDINGS OF THE INTERNATIONAL CONFERENCE ON MULTIMEDIA COMPUTING AND SYSTEMS. WASHINGTON, MAY 15 - 18, 1995, LOS ALAMITOS, IEEE COMP. SOC. PRESS, US, 15 mai 1995 (1995-05-15), pages 308-311, XP010154613 ISBN: 0-8186-7105-X
- "FUNCTIONAL MODEL OF A CONDITIONAL ACCESS SYSTEM" EBU REVIEW- TECHNICAL, EUROPEAN BROADCASTING UNION. BRUSSELS, BE, no. 266, 21 décembre 1995 (1995-12-21), pages 64-77, XP000559450 ISSN: 0251-0936

## Description

### DOMAINE TECHNIQUE

L'invention se situe dans le domaine de la distribution de contenus et concerne plus spécifiquement un procédé de contrôle d'accès à un contenu embrouillé fourni à un terminal de réception par un opérateur auquel est associée une unité de gestion d'accès, le terminal de réception étant muni d'au moins une module de contrôle d'accès, ledit procédé comportant les étapes suivantes :
- associer au contenu une pluralité d'informations nécessaires au désembrouillage dudit contenu,
- transmettre ledit contenu avec ladite pluralité d'informations audit terminal, et,
   à la réception de ladite pluralité d'informations par le terminal,
- renvoyer systématiquement ou occasionnellement au moins une information parmi ladite pluralité d'informations à l'unité de gestion d'accès via une liaison point-à-point,
- vérifier par l'unité de gestion d'accès si l'information renvoyée est compatible avec des droits d'accès préalablement alloués audit terminal,
- transmettre au terminal au moins un paramètre de commande pour permettre l'utilisation du contenu si l'information renvoyée est compatible avec les droits d'accès préalablement alloués audit terminal,
- Sinon, l'unité de gestion ne transmet pas ledit paramètre au terminal.

L'invention concerne également un système de contrôle d'accès comportant un dispositif d'émission comprenant un serveur de contenu embrouillé, une unité de gestion d'accès associée audit dispositifs, un terminal de réception muni d'au moins un module de contrôle d'accès au contenu embrouillé fourni par ledit serveur et auquel est associé une condition d'accès comportant une pluralité d'informations nécessaires au désembrouillage dudit contenu.

L'invention concerne également un programme d'ordinateur comportant un premier module de traitement mémorisé dans le terminal coopérant avec un deuxième module de traitement mémorisé dans l'unité de gestion d'accès, ledit programme étant destiné à la mise en oeuvre d'un procédé de contrôle d'accès conforme à l'invention.

L'invention s'applique également lorsque le contenu numérique embrouillé est distribué à un parc de terminaux récepteurs comprenant un terminal maître et une pluralité de terminaux esclaves dépendant dudit terminal maître, ce dernier remplissant la fonction d'unité de gestion d'accès.

### ÉTAT DE LA TECHNIQUE ANTÉRIEURE

Dans un contexte de diffusion en multicast, il est difficile de réagir efficacement à certaines formes de piratage telles que par exemple la génération frauduleuse de droits ou clés requis pour accéder à des contenus ou encore les tentatives d'empêcher la prise en compte par le système de réception de messages de contremesures émis par opérateur.

Cette situation requiert alors de l'opérateur d'effectuer des modifications du système de réception de l'ensemble des abonnés pour changer son signal de façon telle qu'il ne soit plus exploitable par les dispositifs pirates. Les modifications à réaliser doivent donc être suffisamment profondes, et leur déploiement est alors une opération lourde et coûteuse.

Ces inconvénients proviennent, notamment, du fait que les systèmes de contrôle d'accès connus présentent généralement une architecture sans voie de retour. Dans ce type d'architecture, le terminal fonctionne de façon autonome par rapport à la tête de réseau. De ce fait, une fois le contenu mis à la disposition des abonnés, l'opérateur ne dispose plus d'aucun moyen lui permettant de contrôler, en temps réel, les droits des abonnés ciblés dès lors que tout le contrôle d'accès est effectué au niveau du terminal de réception.

Une forme de détournement de contenu numérique consiste à utiliser un même processeur de sécurité, typiquement une carte à puce valide, par plusieurs terminaux afin de traiter plusieurs voies ECM. Dans ce cas, un seul abonné est connu de l'opérateur pour plusieurs utilisateurs effectifs de la même carte.

Cette forme de détournement permet aux décodeurs incriminés d'accéder à autant de programmes différents dans la limite des droits effectivement présents dans la carte partagée et dans la limite du nombre d'ECM que la carte peut traiter pendant la période de renouvellement des mots de contrôle. Ce détournement de la carte de l'abonné par plusieurs décodeurs se fait sans aucun contrôlée de l'opérateur qui ne peut l'empêcher, ni même le limiter.

Un autre problème se pose également lorsqu'un abonné dispose de plusieurs terminaux de réception de données et/ou services embrouillés. En effet, à moins de considérer les terminaux du même abonné comme autant de terminaux indépendants liés à autant de « copies » de cet abonné, l'opérateur ne dispose pas de solution simple lui permettant de contrôler l'attribution de droits d'accès interdépendants ou communs aux différents terminaux de l'abonné.

L'invention a pour but de pallier ces inconvénients.

Plus spécifiquement, l'invention vise à répartir les opérations de contrôle d'accès entre la partie amont du système, et la partie aval, c'est-à-dire entre, d'une part, les équipements installés chez l'opérateur, dont les opérations sont directement sous le contrôle de ce dernier, et, d'autre part, le terminal de réception qui effectue de façon classique des vérification des droits des abonnés au moyen du module de contrôle d'accès. Cette répartition permet de limiter, voire supprimer, l'autonomie du terminal par rapport à l'opérateur au cours des traitements du contrôle d'accès.

Un autre but de l'invention est de tenir compte des configurations dans lesquelles le terminal de réception ne dispose pas d'une grande puissance de traitement. Ceci peut être le cas lorsque les terminaux de réception sont des terminaux mobiles (téléphone mobile, PDA, ordinateur portable...) avec une autonomie limitée en termes d'énergie et de puissance de traitement.

L'invention a également pour but de fournir aux opérateurs une solution simple permettant d'attribuer de façon contrôlée des droits d'accès interdépendants ou communs à différents terminaux d'un même abonné.

L'invention s'applique dans les cas classiques où le terminal est muni d'un module physique de contrôle d'accès, typiquement une carte à puce, mais elle s'applique avantageusement lorsque le module de contrôle d'accès n'est pas un module physique mais un module logiciel stocké préférentiellement de façon sécurisée dans une mémoire du terminal.

Le document US2002114465 décrit un système de transmission de contenus numériques à un utilisateur final dans lequel ledit un deuxième terminal utilisateur transmet un contenu numérique embrouillé à un premier terminal utilisateur de sorte que ledit deuxième terminal utilisateur ne puisse pas réutiliser ledit contenu et de sorte qu'il soit obligé de se connecter à un centre de contrôle pour obtenir l'autorisation d'utiliser ledit contenu.

Le document WO0971692 décrit un système de control d'accès à des données embrouillées par un mot de control CW et mémorisées sur un support d'enregistrement, ledit système comportant des moyens pour fournir audit support d'enregistrement des données de régénération du mot de control CW différente de ce dernier, et des moyens pour retrouver mot de control CW à partir desdites des données de régénération.

### EXPOSÉ DE L'INVENTION

L'invention préconise un procédé de contrôle d'accès à un contenu embrouillé fourni à un terminal de réception par un opérateur auquel est associée une unité de gestion d'accès, ledit terminal étant muni d'au moins un module de contrôle d'accès.

Ce procédé comporte les étapes suivantes :
- associer au contenu une pluralité d'informations nécessaires au désembrouillage dudit contenu,
- transmettre ledit contenu avec ladite pluralité d'informations audit terminal, et,
   à la réception de ladite pluralité d'informations par le terminal,
- renvoyer systématiquement ou occasionnellement au moins une information parmi ladite pluralité d'informations à l'unité de gestion d'accès via une liaison point-à-point,
- vérifier par l'unité de gestion d'accès si l'information renvoyée est compatible avec des droits d'accès préalablement alloués audit terminal,
- transmettre au terminal au moins un paramètre de commande pour permettre l'utilisation du contenu si l'information renvoyée est compatible avec les droits d'accès préalablement alloués audit terminal,
- Sinon, l'unité de gestion ne transmet pas ledit paramètre au terminal.

Selon l'invention,
le paramètre de commande envoyé par l'unité de gestion d'accès au terminal est un message ECM_{R} destiné à être enregistré avec le contenu et comportant des critères d'accès destinés au contrôle de la réutilisation dudit contenu.

Ainsi, lorsque le terminal de réception établit une communication avec l'unité de gestion d'accès via la liaison point à point, cette dernière "prend la main" pour contrôler les droits dudit terminal à accéder au contenu demande et permet ou empêche l'utilisation du contenu par le terminal en fonction du résultat de ce contrôle. Dans un mode préféré de mise en oeuvre du procédé, le traitement de l'information reçue par l'unité de gestion d'accès comprend une première étape consistant à vérifier si cette information est compatible avec des données d'accès mémorisées dans le terminal, et une deuxième étape consistant à transmettre au terminal au moins un paramètre de commande pour permettre ou empêcher l'utilisation du contenu en fonction du résultat de la première étape.

Grâce au procédé selon l'invention, le contrôle d'accès n'est plus effectué exclusivement au niveau du terminal de réception. Ceci renforce la protection du contenu.

Salon l'invention, la pluralité d'informations nécessaires au désembrouillage du contenu est transmise au terminal dans un message ECM comportant au moins un critère d'accès CA, un cryptogramme CW*_{Kecm} d' un mot de contrôle CW chiffré par une clé K_{ecm}.

Le contenu embrouillé est distribué à un parc de terminaux récepteurs et dans lequel l'unité de gestion d'accès est un terminal maître parmi les terminaux du parc de terminaux récepteurs et le terminal de réception est un terminal esclave parmi les terminaux du parc de terminaux récepteurs.

Le terminal esclave renvoie au moins le cryptogramme CW*_{Kecm} au terminal maître.

Le Système de contrôle d'accès destiné à mettre en oeuvre le procédé selon l'invention comporte un dispositif d'émission comprenant un serveur de contenu, une unité de gestion d'accès associée audit dispositif d'émission, un terminal de réception muni d'au moins un module de contrôle d'accès à un contenu embrouillé transmis par ledit serveur et auquel est associée une pluralité d'informations nécessaires au désembrouillage dudit contenu, ledit terminal de réception étant relié à ladite unité de gestion d'accès par une liaison point à point, ledit module de contrôle d'accès étant adapté pour renvoyer, systématiquement ou occasionnellement à ladite unité de gestion d'accès au moins une information contenue dans la pluralité d'informations nécessaires au désembrouillage du contenu, et ladite unité de gestion d'accès est adaptée pour vérifier si l'information renvoyée est compatible avec des droits d'accès préalablement alloués audit terminal, et pour transmettre au terminal au moins un paramètre de commande pour permettre l'utilisation du contenu si l'information renvoyée est compatible avec les droits d'accès préalablement alloués audit terminal, pour ne pas transmettre ledit paramètre au terminal si l'information renvoyée n'est pas compatible avec les droits d'accès préalablement alloués audit terminal.

Selon l'invention, le paramètre de commande envoyé par l'unité de gestion d'accès au terminal est un message ECM_{R} destiné à être enregistré avec le contenu et comportant des critères d'accès destinés au contrôle de la réutilisation dudit contenu.

Dans une première variante de réalisation du système selon l'invention, ladite unité de gestion d'accès est distincte du dispositif d'émission.

Dans une deuxième variante de réalisation du système selon l'invention ladite unité de gestion d'accès est intégrée au dispositif d'émission.

Dans un mode particulier de réalisation du système de l'invention, le contenu embrouillé est distribué à un parc de terminaux récepteurs et dans lequel l'unité de gestion d'accès est un terminal maître parmi les terminaux du parc de terminaux récepteurs et le terminal de réception est un terminal esclave parmi les terminaux du parc de terminaux récepteurs.

Ledit terminal maître est intégré au dispositif d'émission ou à une antenne de réception collective.

Dans le système selon mode particulier de réalisation, le terminal maître remplit une fonction de passerelle entre le serveur de contenu et les terminaux esclaves du parc.

Le terminal de réception du contenu embrouillé transmis avec une pluralité d'informations nécessaires au désembrouillage dudit contenu est relié à une unité de gestion d'accès via une liaison point-à-point et comporte un module de contrôle d'accès comprenant des moyens pour renvoyer systématiquement ou occasionnellement au moins une information de ladite pluralité d'informations nécessaires au désembrouillage dudit contenu à l'unité de gestion d'accès via la liaison point-à-point de manière à permettre à ladite unité de gestion d'accès de vérifier si l'information renvoyée est compatible avec des droits d'accès préalablement alloués audit terminal, et de transmettre au terminal au moins un paramètre de commande pour permettre l'utilisation du contenu si l'information renvoyée est compatible avec les droits d'accès préalablement alloués audit terminal, ou pour ne pas transmettre ledit paramètre au terminal si l'information renvoyée n'est pas compatible avec les droits d'accès préalablement alloués audit terminal,

Selon l'invention, ledit paramètre de commande transmis, par l'unité de gestion d'accès au module de contrôle d'accès est un message ECM_{R} destiné à être enregistré avec le contenu et comportant des critères d'accès destinés au contrôle de la réutilisation dudit contenu.

Le programme d'ordinateur mémorisé sur un support d'enregistrement comporte des instructions destinées à la mise en oeuvre d'un procédé de contrôle d'accès selon l'invention lorsqu'il est exécuté sur un ordinateur.

Dans un exemple de réalisation, la première étape de traitement de l'information reçue par l'unité de gestion d'accès et le contrôle de la condition d'accès par le terminal de réception sont effectués indépendamment l'un de l'autre, systématiquement ou occasionnellement, selon un cadencement défini par l'opérateur.

L'opérateur est ainsi en mesure de moduler finement la répartition spatiale et temporelle du contrôle d'accès entre l'opérateur et le terminal de reception.

Dans un autre exemple de réalisation, le cadencement défini par l'opérateur est imprévisible pour le terminal de réception.

Dans de réalisation du procédé le terminal renvoie vers l'unité de gestion d'accès au moins le cryptogramme CW*_{Kecm} si le module de contrôle d'accès ne dispose pas de la clé K_{ecm} pour déchiffrer ledit cryptogramme CW*_{Kecm}. Le paramètre envoyé, ensuite, par l'unité de gestion d'accès au terminal est un mot de contrôle CW déchiffré avec la clé K_{ecn} et rechiffré par une clé Kₜₑᵣ connue spécifiquement du terminal.

Dans un deuxième exemple d'application, le procédé est mis en oeuvre pour contrôler l'accès à un contenu protégé par une licence DRM.

Dans ce cas, l'information renvoyée par le terminal à l'unité de gestion d'accès est la licence DRM.

### BRÈVE DESCRIPTION DES DESSINS

D'autres caractéristiques et avantages de l'invention ressortiront de la description qui va suivre, prise à titre d'exemple non limitatif, en référence aux figures annexées dans lesquelles :
- la figure 1 représente un schéma général d'un système de contrôle d'accès;
- la figure 2 représente schématiquement un premier exemple du système de la figure 1;
- la figure 3 est un schéma bloc illustrant une application particulière du procédé;
- les figures 4 à 6 représentent un chronogramme illustrant le cadencement du procédé;
- la figure 7 est un organigramme illustrant les étapes d'un mode de mise en oeuvre du procédé.
- la figure 8 illustre schématiquement une deuxième application du procédé dans laquelle le contrôle d'accès est géré par un terminal maître auquel sont associés plusieurs terminaux esclaves.
- la figure 9 illustre schématiquement une procédure de contrôle de l'habilitation d'un terminal esclave à exploiter le contenu numérique.

### EXPOSÉ DÉTAILLÉ DE MODES DE RÉALISATION PARTICULIERS

Un procédé pour contrôler l'accès à des programmes ou des contenus multimédias diffusés à des abonnés munis de droits d'accès a être décrit.

Dans la description qui suit, des références identiques désigneront les éléments des différentes figures remplissant des fonctions identiques ou équivalentes. Notons que le procédé peut être mis en oeuvre dans tout réseau connecté doté d'une voie de retour à débit suffisant, tel qu'un réseau câblé du type DSL (Pour Digital Subscriber Line), ou un réseau sans fil du type Wi-Fi ou Wi-Max (ou ASFI, pour Accès Sans Fil à Internet), ou encore un réseau mobile 3G.

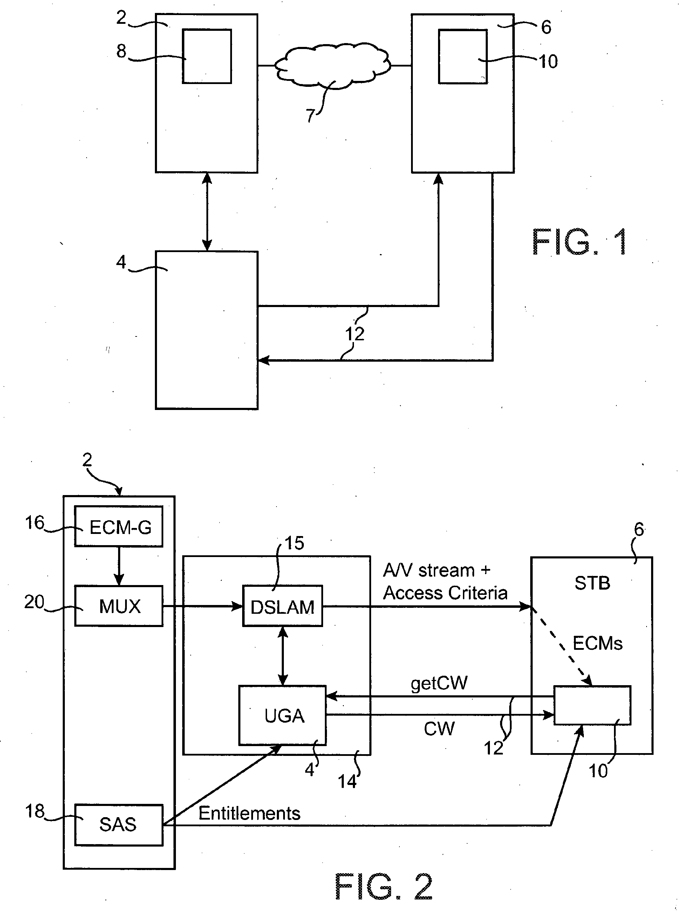

La figure 1 illustre un schéma général d'un système de distribution de contenu dans lequel le procédé est susceptible d'être mis en oeuvre.

Ce système comporte un dispositif d'émission 2 associé à une unité de gestion d'accès 4, et un terminal de réception 6.

Le dispositif d'émission 2 comporte un serveur de contenu 8 distribuant des contenus embrouillés vers le terminal 6 via un réseau 7 de transport, tel qu'un réseau câblé ou un réseau de diffusion hertzienne, ou encore via une ligne DSL, et le terminal 6 comporte un module de contrôle d'accès 10 qui peut être une carte à puce ou, préférentiellement, un module logiciel réalisant les fonctions de contrôle.

Le terminal 6 est relié à l'unité de gestion d'accès 4 par une liaison point à point bidirectionnelle 12.

En référence à la figure 2, illustrant schématiquement un exemple particulier de système de la figure 1, le terminal de réception 6 est un décodeur numérique installé chez l'abonné et la liaison entre l'opérateur et les abonnés est réalisée par une ligne DSL via un équipement intermédiaire 14 comportant un multiplexeur DSLAM 15 (pour Digital Subscriber Line Access Multiplexer en anglais ou Multiplexeur d'Accès pour Lignes d'Abonnés Numériques) communiquant avec une unité de gestion d'accès 4 (ou UGA). Cette dernière est intégrée à l'équipement 14.

Notons que l'unité de gestion d' accès 4 peut être installée chez un tiers de confiance ayant pour fonction de contrôler les droits des abonnés sous la supervision de l'opérateur sans sortir du cadre de l'invention.

Le dispositif d'émission 2 comporte un module ECM-G 16 (pour Entitlement Control Message Generator) destiné à calculer et à diffuser des messages d'exploitation ECM, un module SAS 18 (pour Subscriber Authorization System), destiné à calculer et à diffuser des messages EMM (pour Entitlement Management Message) nécessaires entre autres à l'envoi des droits et des clés aux abonnés et un multiplexeur MUX 20 destiné à constituer un bouquet de contenus à partir de programmes et/ou services fournis par l'opérateur.

Le terminal 6 est constitué par exemple d'un décodeur/désembrouilleur de contenus multimédias, connu dans l'art antérieur en tant que Set Top Box en anglais (ou STB). Il dispose d'un processeur de sécurité 10 spécialement conçu pour traiter le contrôle d'accès aux contenus et la gestion des droits et des secrets cryptographiques (clés). Un exemple bien connu d'un tel processeur de sécurité est la carte à puce connectée au terminal. Un autre exemple du processeur de sécurité 10 peut également être réalisé par une fonction logicielle dédiée et intégrée dans le terminal.

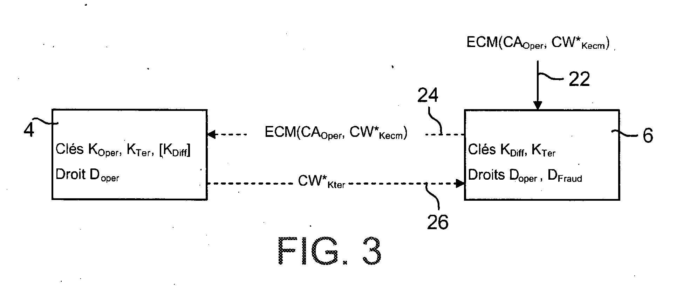

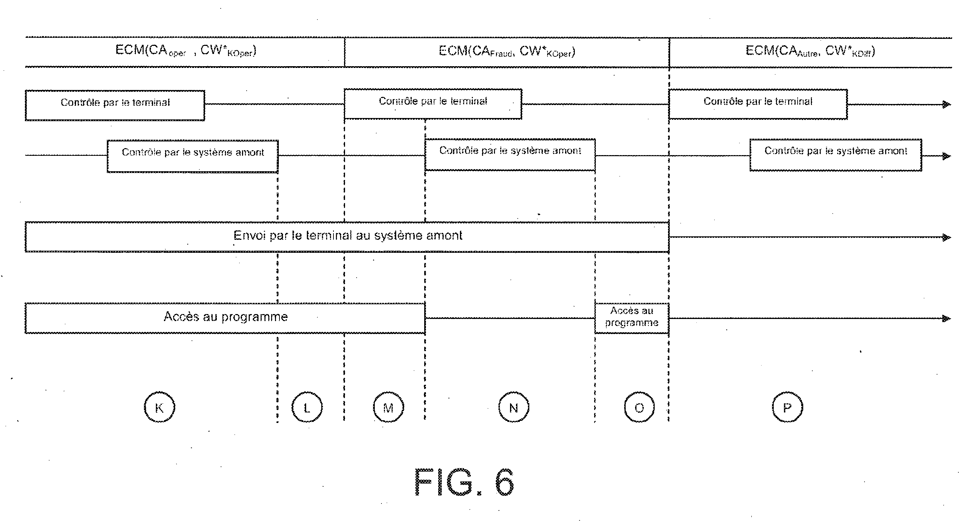

Le procédé va maintenant être décrit par référence aux figures 3 à 7.

Les contenus fournis représentant des programmes multimédias diffusés sous forme embrouillée par un mot de contrôle CW.

Le terminal 6 dispose d'une clé K_{Diff} commune aux terminaux adressés par l'opérateur, d'une clé K_{Ter} spécifique à ce terminal et d'un droit D_{Oper}. Ces clés et ce droit ont été chargés préalablement dans le processeur de sécurité, typiquement par message EMM. En outre, en cas d'action illicite de l'abonné, le processeur de sécurité continent un droit D_{Fraud} acquis frauduleusement.

L' unité de gestion d' accès 4 dispose préalablement de la clé T_{Oper}, de la clé K_{Ter} de chaque terminal et sait de quel droit D_{Oper} dispose chaque terminal.

En référence à la figure 3, la condition d'accès est transmise au terminal (flèche 22) dans un message ECM généré par l'ECM-G 16 du dispositif d'émission 2. Ce message ECM comporte un critère d'accès CA_{Oper} et le cryptogramme CW*_{Kecm} du mot de contrôle CW chiffré par une clé K_{ecm}. qui est soit la clé K_{Oper} connue seulement de l'opérateur, soit la clé K_{Diff} connue de tous les terminaux de l'opérateur. Ainsi, l'accès à un programme auquel le message ECM est associé est possible dès lors que le terminal dispose d'au moins un droit D_{Oper} satisfaisant le critère d' accès CA_{Oper} et de la clé K_{ecm} permettant d'obtenir le mot de contrôle CW par déchiffrement du cryptogramme CW*_{Kecm} ce qui est le cas dans cet exemple si la clé Kecm est la clé K_{Diff}.

A la réception des programmes, le terminal 6 renvoie (flèche 24) l'ECM reçu à l'unité de gestion d'accès 4.

Dans une première variante de mise en oeuvre du procédé, dans laquelle l'opérateur veut contrôler systématiquement le désembrouillage du contenu par le terminal, la clé K_{ecm} est la clé K_{Oper} qui n'est pas transmise au terminal 6. Dans ce cas, le terminal renvoie systématiquement l'ECM à l'unité de gestion d'accès 4.

Dans une autre variante de mise en oeuvre où le contrôle du désembrouillage du contenu est partagé entre le terminal et l'opérateur, le terminal renvoie occasionnellement l'ECM à l'unité de gestion d'accès 4 après une vérification préalable du critère d'accès par le module 10.

Dans cette variante, le terminal renvoie l'ECM si, par exemple, l'abonné ne dispose pas du droit Dₒₚₑᵣ qui permettrait de vérifier le critère d'accès ou si le terminal ne dispose pas de la clé K_{ecm} de déchiffrement du cryptogramme CW*_{Kecm}. Si au contraire le terminal dispose du droit vérifiant le critère d'accès et si le cryptogramme CW*_{Kecm} peut être déchiffré avec la clé K_{Diff}, le terminal accède au programme comme dans l'art antérieur.

Lorsque l'unité de gestion d'accès 4 reçoit l'ECM du terminal 6, elle vérifie si le terminal 6 dispose des droits nécessaires pour accéder aux programmes reçus.

Dans un premier mode de réalisation, l'unité de gestion d'accès dispose d'une base de données dans laquelle sont mémorisées les descriptions des droits que l'opérateur a envoyés au terminal de l'abonné. L'unité de gestion d'accès effectue ainsi la vérification du critère d'accès par rapport aux droits dont l'abonné dispose officiellement. Ce mode inhibe toute vérification du critère d'accès par rapport à des droits illicites que l'abonné aurait pu charger frauduleusement dans son terminal.

Dans un second mode de réalisation, l'unité de gestion d'accès lit à distance le contenu du processeur de sécurité du terminal et effectue la vérification du critère d'accès par rapport aux droits effectivement présents dans le terminal. Ce mode dispense l'unité de gestion d'accès de supporter une base de données des droits de tous les abonnés et permet en outre de vérifier le contenu des processeurs de sécurité par contrôle de checksum ou autre procédé analogue.

Lorsque la vérification des droits du terminal par l'unité de gestion d'accès est positive, celle-ci renvoie au terminal un paramètre de commande pour permettre l'accès, au contenu.

Dans le cas contraire, elle ne renvoie pas ce paramètre au terminal empêchant ainsi l'accès au contenu.

Lorsque le critère d'accès est vérifié positivement par l'unité de gestion d'accès 4, celle-ci déchiffre le cryptogramme CW*_{Kecm} avec la clé Kecm, rechiffre le mot de contrôle CW avec la clé Kₜₑᵣ connue spécifiquement du terminal et renvoie au terminal (flèche 26) le cryptogramme CW*_{Kter} du mot de contrôle ainsi rechiffré. La clé K_{Ter} est déterminée selon l'identification du terminal faite par l'unité de gestion d'accès lors de l'établissement de la liaison point à point 12 selon une méthode quelconque d'authentification de l'état de l'art et extérieure au procédé.

Dans une variante particulière du procédé, le terminal envoie (24) à l'unité de gestion d'accès seulement le cryptogrammes CW*_{Kacm} entrait de l'ECM. Dans ce cas, l'unité de gestion d'accès 4 considère que le critère d'accès est implicitement toujours vérifié et effectue seulement le déchiffrement/rechiffrement du mot de contrôle CW. Ainsi l'opérateur continue à contrôler le désembrouillage par le terminal par l'utilisation de la clé spécifique K_{Ter}.

Selon une caractéristique avantageuse du procédé, la vérification du critère d'accès par le module de contrôle d'accès 10 du terminal de réception 6 et le traitement de l'ECM par l'unité de gestion d'accès 4 sont effectués indépendamment l'un de l'autre selon un cadencement défini par l'opérateur.

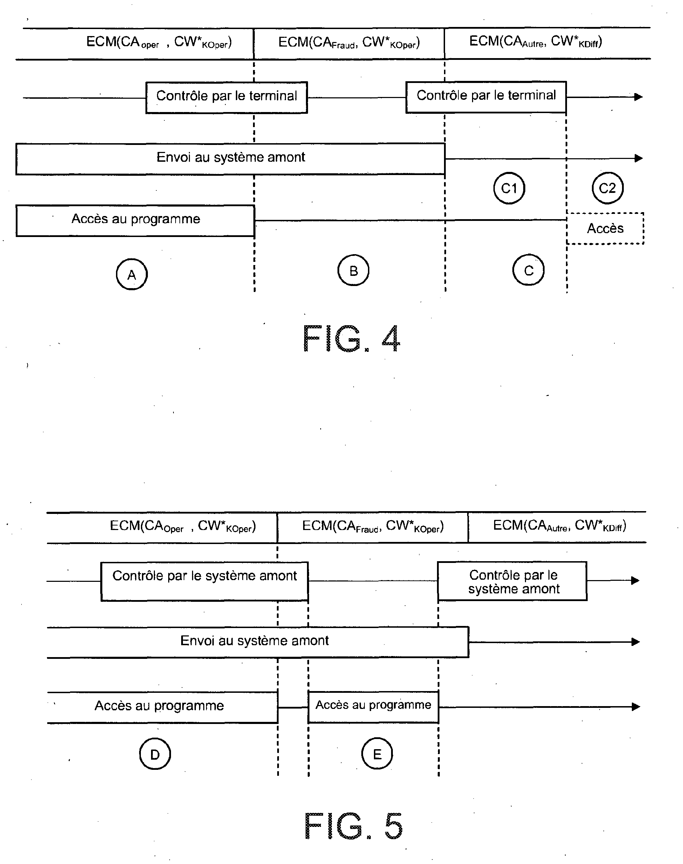

Ce cadencement sera décrit ci-après par référence aux figures 4 à 6.

Comme décrit précédemment, le terminal 6 dispose typiquement :
- de la clé K_{Diff} représentant une instance de K_{ecm} qui lui permet d'obtenir le CW quand l'ECM transporte le cryptogramme CW*_{KDiff}. Cette clé est commune à un ensemble de terminaux.
- de la clé K_{Ter}, dédiée à ce terminal 6, permettant d'obtenir le mot de contrôle CW à partir du cryptogramme CW*_{KTer} envoyé au terminal par l'unité de gestion d'accès 4.
- d' un titre d'accès D_{Oper} reçu officiellement de l'unité de gestion d'accès 4 qui en connaît l'existence dans le terminal 6.
- d' un titre d'accès D_{Fraud} obtenu frauduleusement par l'utilisateur du terminal. La détention de ce titre d'accès par le terminal n'est donc pas connue de l'unité de gestion d'accès 4.

L'unité de gestion d'accès 4 dispose typiquement :
- de la clé K_{Oper} représentant une autre instance de K_{ecn} qui lui permet d'obtenir le mot de contrôle CW quand l'ECM transporte le cryptogramme CW*_{KOper}. Cette clé est connue uniquement de l'unité de gestion d'accès 4.
- de la clé K_{Ter}, dédiée au terminal 6 considéré, qui permet de fournir à ce terminal 6 le mot de contrôle CW sous la forme d'un cryptogramme CW*_{KTer}.
- du titre d'accès Doper que l'unité de gestion d'accès 4 a envoyé officiellement au terminal 6.

Afin d'illustrer les différentes situations, on définit trois valeurs distinctes pour la condition d'accès CA:
- CA_{Oper} : cette condition est satisfaite par la détention (licite) du droit D_{Oper} par le terminal,
- CA_{Fraud} : cette condition est satisfaite par la détention frauduleuse d'un droit D_{Fraud} par le terminal 6,
- CA_{Autre} : cette condition n'est pas satisfaite par le terminal qui ne détient aucun droit correspondant.

Les phases A, B et C illustrent l'effet du cadencement du contrôle de la condition d'accès par le terminal sur l'accès au programme.

En A : L'ECM est renvoyé à l'unité de gestion d'accès 4 par le terminal 6 soit parce que ce dernier ne contrôle pas l'ECM, soit parce qu'il a trouvé un droit satisfaisant la condition d'accès mais que le mot de contrôle est chiffré par la clé K_{Oper} dont il ne dispose pas. Durant cette période, il y a accès au programme car l'unité de gestion d'accès 4 constate que la condition d'accès est satisfaite. Elle envoie au terminal le cryptogramme (W*_{KTer} du mot de contrôle chiffré avec la clé du terminal.

En B : L'ECM est renvoyé à l'unité de gestion d'accès 4 soit parce que le terminal 6 ne contrôle pas l'ECM, soit parce qu'il a trouvé un droit illicite satisfaisant la condition d'accès alors qu'il n'a pas la clé K_{Oper}. Durant cette période, l'accès au programme est interdit car l'unité de gestion d'accès 4 constate que la condition d'accès ne peut pas être satisfaite par les droits officiels du terminal 6. Elle n'envoie pas de cryptogramme du mot de contrôle CW.

En C : L'ECM n'est pas envoyé à l'unité de gestion d'accès 4 car le terminal dispose de la clé K_{Diff} permettant de déchiffrer le cryptogramme CW*_{Kecm}. Si le terminal est dans une phase du cadencement où il doit contrôler le critère d'accès (C1), il n'y a pas d'accès au programme puisque le critère d'accès CA_{Autre} ne peut pas être satisfait par un droit disponible dans le terminal. Si du fait du cadencement le terminal ne contrôle pas le critère d'accès (C2), il y a accès au programme par le seul déchiffrement du mot de contrôle. Il est évident que ce dernier cas C2 doit être évité dans la mise en oeuvre du procédé, par exemple en forçant le contrôle du critère d'accès indépendamment du cadencement dès lors que le cryptogramme CW*_{Kecm} peut être déchiffré par le terminal.

Les phases D et E illustrent l'effet du cadencement du contrôle de la condition d'accès par l'unité de gestion d'accès 4 sur l'accès au programme.

En D : Il y a accès au programme soit parce que l'unité de gestion d'accès 4 ne contrôle pas la condition d'accès et la considère par défaut comme satisfaite, soit parce que cette unité de gestion d'accès 4 vérifie la condition d'accès et la constate satisfaite.

En E : Il y a accès au programme parce que l'unité de gestion d' accès 4 ne vérifie pas la condition d'accès et la considère par défaut comme satisfaite alors que le terminal 6 exploite un droit illicite.

Les phases K à P illustrent l'effet, sur l'accès au programme, du cadencement du contrôle de la condition d'accès conjointement par le terminal et par l'unité de gestion d'accès 4.

En K : l'accès au programme est autorisé car la condition d'accès est constatée satisfaite par le terminal 6 et/ou par l'unité de gestion d'accès 4 et éventuellement estimée satisfaite par défaut par un seul de ces deux modules.

En L : l'accès au programme est autorisé car la condition d'accès est constatée satisfaite par défaut par le terminal 6 et par l'unité de gestion d'accès 4. Les deux décisions par défaut sont ici conformes à la combinaison condition d'accès/droit officiel.

En M : l'accès au programme est autorisé car la condition d'accès est constatée satisfaite effectivement par le terminal 6 et par défaut par l'unité de gestion d'accès 4. Dans ce cas, l'unité de gestion d'accès 4 ne détecte pas que le terminal 6 exploite un droit illicite.

En N : Il n'y a pas d'accès au programme car la condition d'accès est constatée comme non satisfaite par l'unité de gestion d'accès 4 qui ne connaît pas le droit illicite qu'exploite le terminal 6.

Dans la première partie de ce cas, l'unité de gestion d'accès 4 détecte que le terminal 6 dispose d'un droit illicite si le terminal 6 lui précise qu'il dispose d'un droit valide.

En O : L'accès au programme est autorisé car la condition d'accès est estimée satisfaite par défaut par le terminal 6 et par l'unité de gestion d'accès 4.

En P : l'ECM n'est pas envoyé à l'unité de gestion d'accès 4 car le terminal dispose de la clé K_{Diff} utilisée pour chiffrer le mot de contrôle CW. Le contrôle par l'unité de gestion d'accès est ineffectif. Cette phase est similaire à la phase C décrite plus haut et doit bénéficier de la même implémentation particulière pour éviter que, hors du contrôle par le terminal, il puisse y avoir accès au programme.

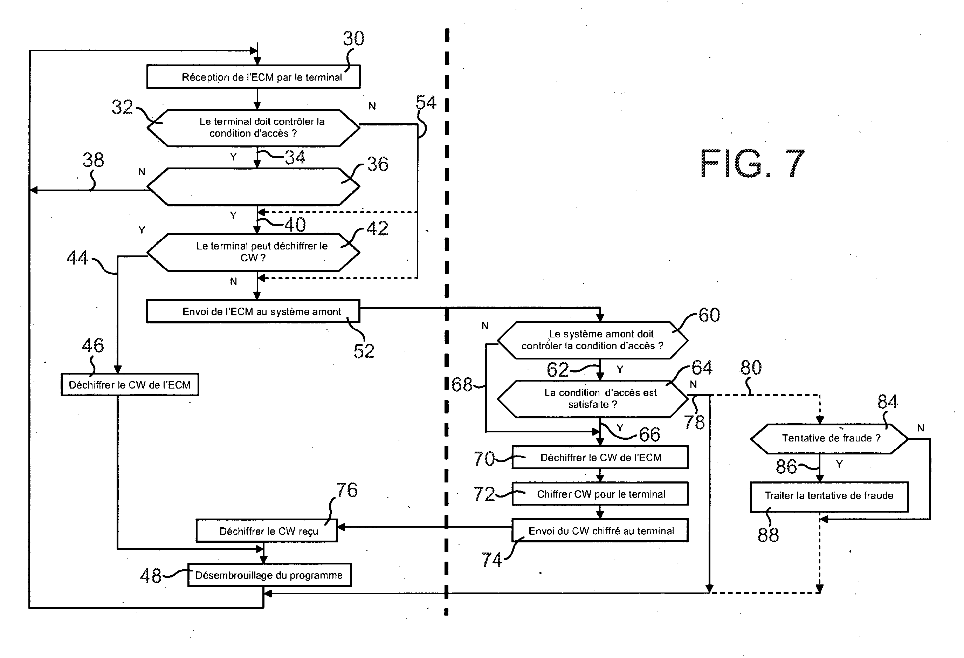

Les étapes du procédé vont maintenant être décrites en référence à la figure 7.

Sur cette figure 7, les étapes représentées à la partie gauche correspondent aux traitements réalisés par le terminal 6, et celles de la partie droite aux traitements réalisés par l'unité de gestion d'accès 4.

Quand l'abonné veut accéder à un programme, le terminal 6 acquiert les flux numériques contenant les composantes vidéo, audio et autres du programme ainsi que les messages ECM.

A chaque message ECM reçu (étape 30), le terminal vérifie s'il est dans une période où il doit contrôler la condition d'accès (étape 32). Le test effectué à l'étape 32 matérialise le cadencement du procédé au niveau du terminal 6. Si ce dernier doit effectuer ce contrôle (flèche 34), la condition d'accès contenue dans l'ECM est comparée aux droits présents dans le terminal (étape 36).

Si aucun droit ne satisfait la condition d'accès (flèche 38), le traitement de l'ECM est terminé, il n' y a pas d'accès au programme et le terminal 6 attend le message ECM suivant (étape 30). Si la condition d'accès est satisfaite par un droit présent dans le terminal (flèche 40), le terminal 6 vérifie (étape 42) s'il dispose de la clé K_{ecm} lui permettant de déchiffrer le mot de contrôle CW. Cette étape matérialise l'activation du procédé par l'opérateur

Si le terminal 6 dispose de la clé K_{acm} (flèche 44), il déchiffre le mot de contrôle CW (étape 46) et peut accéder au programme par désembrouillage (étape 48).

Sinon, il envoie le message ECM à l'unité de gestion d'accès 4 (étape 52).

Dans le cas où le terminal 6 n'est pas dans une période où il doit contrôler la condition d'accès (flèche 54), deux scénarios sont à envisager :
- soit il vérifie (étape 42) s'il peut obtenir lui-même le mot de contrôle CW sans recourir à l'unité de gestion d'accès 4,
- soit il renvoie systématiquement (étape 52) l'ECM à l'unité de gestion d' accès 4.

Dans le premier cas, comme cela est décrit ci-dessus, il déchiffre (étape 46) le mot de contrôle CW si la vérification est positive. Le traitement du contrôle d'accès est alors effectué par le terminal 6.

Dans le deuxième cas, le terminal 6 doit systématiquement solliciter l'unité de gestion d'accès 4. Dans ce cas, il ne peut pas y avoir un accès au programme sans contrôle de la condition d'accès par l'unité de gestion d'accès 4.

Lorsque le terminal envoie (étape 52) un ECM à l'unité de gestion d'accès 4, celle-ci vérifie (étape 60) si elle est dans une période où elle doit contrôler la condition d'accès de l'ECM.

L'étape 60 matérialise le cadencement du procédé au niveau de l'unité de gestion d'accès 4.

Si l'unité de gestion d'accès 4 doit contrôler la condition d'accès (flèche 62), elle compare (étape 64) cette condition d'accès aux droits du terminal 6.

Comme cela a été décrit plus haut, l'unité de gestion d'accès 4 effectue cette comparaison à partir de sa propre base de données des droits des terminaux d'abonnés sans interroger explicitement le terminal 6. Seuls les droits licites sont considérés dans ce traitement pour accorder ou refuser l'accès aux programmes. En variante elle peut également effectuer cette comparaison en interrogeant à distance le processeur de sécurité du terminal. Dans ce cas la présence de droits illicites peut être détectée par exemple par des contrôles de checksum sur les droits constatés dans ce processeur.

Si la condition d'accès est satisfaite (flèche 66) ou si l'unité de gestion d'accès 4 n'a pas à contrôler la condition d'accès (flèche 68), l'unit de gestion d'accès 4 déchiffre le mot de contrôle CW de l'ECM (étape 70), chiffre le mot de contrôle CW (étape 72) obtenu avec une clé Kₜₑᵣ dédiée au terminal 6 et envoie (étape 74) le cryptogramme obtenu au terminal 6. Ce dernier déchiffre (étape 76) avec sa clé dédiée le mot de contrôle CW et désembrouille (48) le programme.

Si l'unité de gestion d'accès 4 considère que, conformément aux droits du terminal 6, la condition d'accès n'est pas satisfaite (flèche 78), elle ne fournit pas au terminal 6 le mot de contrôle CW permettant le désembrouillage du programme.

Dans une variante de mise en oeuvre du procédé illustrée par les traits pointillés, (flèche 80), dans laquelle le terminal 6 a précisé via l'ECM, lors de l'étape 52, qu'il dispose d'un droit satisfaisant la condition d'accès, l'unité de gestion d'accès 4 corrèle alors (étape 84) cette information avec sa propre conclusion et peut détecter (flèche 86) que le terminal 6 tente d'accéder illicitement au contenu et déclencher (étape 88) un traitement approprié d'une telle tentative de fraude.

Le procédé quand il est mis en oeuvre dans un contexte de réutilisation d'un contenu préalablement obtenu selon le procédé, pour la relecture ou la redistribution d'un contenu enregistré, représente l'invention.

Dans ce cas, le paramètre envoyé par l'unité de gestion d'accès 4 au terminal 6 est un message ECM_{R} destiné à être enregistré dans le terminal avec le contenu et comportant des critères d'accès destinés au contrôle de la réutilisation dudit contenu, relecture ou redistribution, par exemple. Lors de la relecture du contenu ou de sa réutilisation, le message ECM_{R} sera, selon sa constitution, traité selon le procédé, en faisant appel à l'unité de gestion d'accès 4, ou selon l'art antérieur par le seul terminal.

Le procédé peut également s'appliquer pour renforcer le contrôle d'accès dans un système DRM.

Dans ce cas, une unique clé est généralement requise pour désembrouiller l'ensemble d' un contenu. Cette clé est mise à disposition indépendamment du contenu lui-même, encapsulée dans une licence spécifique au système de réception destinataire.

Dans ce contexte, le procédé proposé s'applique en constituant la licence de façon spécifique au système amont, de façon à ce que le système de réception ne puisse pas exploiter cette licence sans recourir au système amont, le système amont pouvant alors vérifier le droit du système de réception à accéder au contenu considéré, puis reconstituer le cas échéant la licence de façon spécifique à ce système de réception.

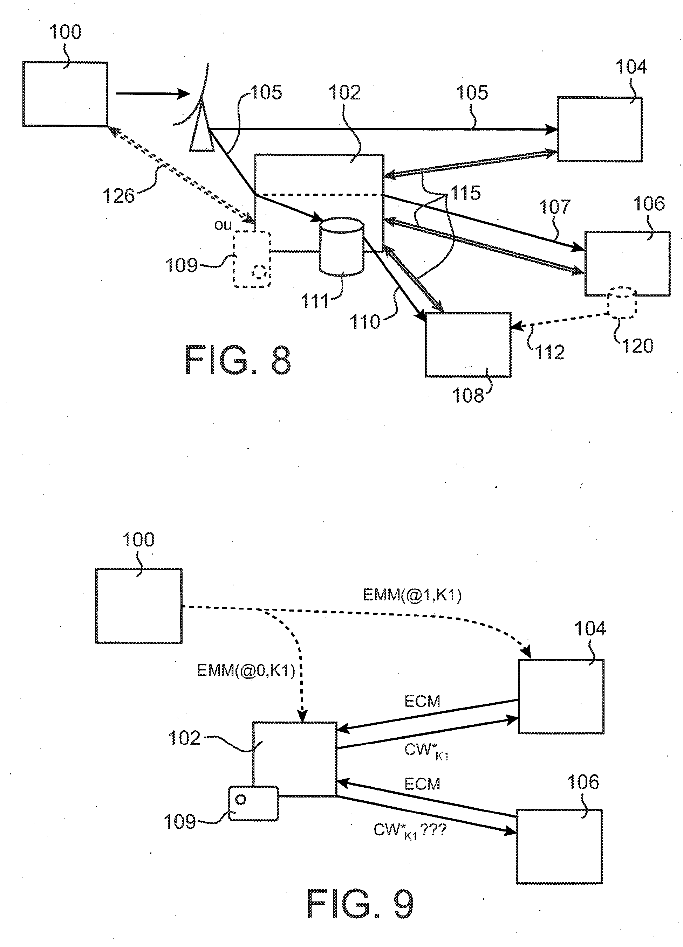

La figure 8 illustre schématiquement une architecture de distribution de contenus et/ou de services, désignés par la suite en tant que « contenus », dans laquelle un opérateur 100 fournit un contenu embrouillé à un ensemble de terminaux (102, 104, 106, 108) d'une même entité, telle qu'un même foyer familial, regroupant plusieurs terminaux pour permettre à un abonné de visualiser sur plusieurs récepteurs audiovisuels des contenus différents, en fonction des divers droits attribués à cet abonné par l'opérateur.

Dans l'exemple illustré par cette figure 8, le terminal maître 102 et les terminaux esclaves sont munis de dispositifs de démodulation (démodulateur DVB-S, DVB-C, DVB-T, modem IP, ...) adaptés aux réseaux de distribution auxquels ils sont connectés. En outre, dans cet exemple, le terminal maître 102 est muni d'un processeur de sécurité, tel qu'une carte à puce 109 et les terminaux esclaves (104, 106, 108) ne disposent pas de carte à puce mais permettent d'accéder aux contenus de l'opérateur en se connectant au terminal maître 102 par lequel ils pourront obtenir l'accès auxdits contenus.

Notons que terminal maître 102 peut être utilisé par l'abonné pour accéder aux contenus de façon classique.

Le terminal maître 102 et le terminal esclave 104 reçoivent directement (flèches 105) de l'opérateur 100 un contenu embrouillé, le terminal esclave 106 reçoit (flèche 107) un contenu via le terminal maître 102, le terminal esclave 108 reçoit (flèche 110) un contenu enregistré dans une mémoire locale 111 du terminal maître 102 ou dans une mémoire locale du terminal esclave 106, (flèche 112).

Notons cependant qu' un terminal esclave (104, 106, 108) peut être doté néanmoins d'une carte à puce permettant d'effectuer le contrôle d'accès aux contenus partiellement par le terminal esclave et partiellement par le terminal maître, selon un cadencement contrôlé par l'opérateur tel que cela a été décrit précédemment.

L'architecture décrite à la figure 8 s'applique également à d'autres entités telles qu'un serveur passerelle (home gateway) ou une antenne collective sans sortir du cadre de l'invention.

Dans tous les cas, les terminaux esclaves 104, 106 et 108 disposent chacun d'une liaison point-à-point (flèche 115) avec le terminal maître 102, et renvoient audit terminal maître 102 via cette liaison point-à-point une information extraite de la condition d'accès associée au contenu pour permettre au terminal, maître 102 de gérer le contrôle d'accès à ce contenu.

Cette architecture peut en outre être étendue à une organisation en cascade des terminaux. En effet, un terminal esclave peut être le terminal maître d' autres terminaux esclaves qui lui sont connectés. Cette capacité d'extension permet de construire des topologies fonctionnelles particulières de terminaux. La limitation d'une telle extension d'architecture provient des temps de réponse induits par les cascades multiples de terminaux.

Dans un mode préféré de réalisation, les terminaux esclaves sont équipés d'une puce électronique sécurisée avec laquelle ils procèdent au déchiffrement du cryptogramme du mot de contrôle fourni par le terminal maître.

Dans ce cas, la sécurisation de l'accès au contenu par l'un des terminaux esclaves 104, 106 et 108 est obtenu grâce à l'utilisation conjointe de l'unique carte à puce insérée dans le terminal maître 102 et de la puce électronique dans chacun des terminaux esclaves 104, 106 et 108. Dans un autre mode de réalisation cette fonction de déchiffrement est effectuée par un module logiciel dédié sécurisé du terminal esclave.

La solution s' applique aussi bien aux contenus diffusés en direct qu'aux contenus préalablement enregistrés par le terminal maître 102 ou par un autre terminal esclave 106.

L'opérateur peut définir depuis son système amont les terminaux esclaves autorisés à être gérés par le terminal maître, introduisant ainsi une notion de domaine. Ainsi, un terminal esclave non autorisé ne pourra pas déchiffrer les contenus issus du terminal maître.

Dans un mode préféré de réalisation, l'opérateur contrôle les terminaux esclaves habilités à fonctionner avec un terminal maître en contrôlant la distribution de la clé de session, comme cela sera décrit plus loin.

En variante, l'opérateur peut également limiter le nombre de terminaux esclaves qui peuvent faire appel à un même terminal maître en créant une liste explicite contenant les identifiants des terminaux autorisés ou interdits. Dans ce cas le contrôle d'un terminal esclave résulte de son habilitation à disposer d'une liaison point à point établie avec le terminal maître. Le nombre de terminaux autorisés dans la liste peut alors être choisi par l'opérateur.

Dans tous les cas, seuls les terminaux esclaves autorisés reçoivent une clé de session compatible avec le terminal maître auquel ils sont rattachés.

L'élimination d'un terminal esclave de la liste des terminaux autorisés est également contrôlée par l'opérateur typiquement en excluant ce terminal de la liste de terminaux esclaves auxquels est envoyée une nouvelle clé de session.

### Réception et enregistrement des contenus par le terminal « maître »

L'accès aux contenus par le terminal maître, pour leur utilisation, leur enregistrement ou leur relecture, est contrôlé conformément au procédé de la figure 1 décrit précédemment, par sollicitation de sa carte à puce si le terminal en est doté et/ou de l'unité de gestion d'accès 4 de l'opérateur. A la réception de la condition d'accès, le terminal maître 102 renvoie au moins une information de ladite condition d'accès à l'unité de gestion d'accès 4 via la liaison point-à-point 12. Cette dernière traite ladite information pour autoriser ou empêcher l'utilisation du contenu par le terminal maître 102. Ce traitement des contenus par le terminal maître n'est pas modifié du fait que des terminaux esclaves peuvent le solliciter par ailleurs.

Par contre, de par son statut de maître, le terminal maître 102 dispose de la fonctionnalité supplémentaire lui permettant d'être sollicité par des terminaux esclaves 104, 106, 108 pour contrôler leur accès à des contenus. Il peut en outre être doté de la capacité à transmettre à des terminaux esclaves les contenus qu'il reçoit (terminal 106) ou des contenus qu'il a enregistrés (terminal 108). Cette opération est contrôlée par l'opérateur en programmant, dans le terminal maître 102, les flux/services qui peuvent être redirigés vers l'un des (ou les) terminaux esclaves 104, 106 ou 108.

### Utilisation d'un contenu par une terminal esclave

Un terminal esclave reçoit les contenus/services directement (terminal 104) de la source amont, via une liaison satellite par exemple, par l'intermédiaire (terminal 106) du terminal maître, ou après leur enregistrement (terminal 108) sur un autre terminal maître ou esclave.

A la réception du contenu et de la condition d'accès associée (ECM), le terminal esclave 104, 106 ou 108 se connecte au terminal maître 102 via le canal de communication 115, et transmet le message ECM au terminal maître 102 pour traitement. Dans la mesure où les données envoyées au terminal maître 102 par le terminal esclave 104, 106 et 108 sont chiffrées, le canal de communication 115 peut ne pas être sécurisé.

Le terminal maître 102 soumet ensuite l'ECM à la carte à puce 109 qui déchiffre le mot de contrôle CW si les conditions d'accès sont remplies, et le rechiffre localement avec une clé de session K_{S}.

Le mot de contrôle CW ainsi rechiffré localement est envoyé par le terminal maître 102 au terminal esclave 104, 106 ou 108.

A la réception du mot de contrôle CW ainsi rechiffré, le terminal esclave 104, 106 ou 108 soumet le cryptogramme du CW à la puce électronique sécurisée qui en effectue le déchiffrement avec la clé de session K_{S} et applique le mot de contrôle déchiffré CW au désembrouilleur.

Notons que l'opérateur peut contrôler si un terminal esclave 104, 106 ou 108 est associé au terminal maître 102 en maîtrisant la présence de la clé de session K_{S} dans ce terminal esclave. Ainsi seul un terminal esclave disposant de la bonne clé de session K_{S} est en mesure d'obtenir le mot de contrôle CW, et donc de déchiffrer les contenus redistribués par le terminal maître 102 ou reçus directement.

Notons également que la fonction de la puce électronique sécurisée peut être remplie par un processeur de sécurité, tel qu'une carte à puce, ou un module logiciel sans sortir du cadre de l'invention.

Le procédé selon l'invention s'applique également lorsque le terminal esclave 106, au lieu d'exploiter directement (typiquement visualiser) le contenu, l'enregistre dans une mémoire locale 120. Dans ce cas, si les conditions d'accès sont satisfaites, le terminal maître 102 fournit au terminal esclave 106 des messages ECM à enregistrer avec le flux.

A la relecture d'un contenu enregistré, le terminal esclave 106 ou 108 fait appel, comme pour un contenu traité à sa réception, au terminal maître 102 pour traiter les conditions d'accès.

### Gestion de la clé de session

La clé de session destinée à chiffrer le mot de contrôle CW que le terminal maître 102 envoie au terminal esclave 104, 106 ou 108 est connue du terminal maître 102 et des terminaux esclaves 104, 106 et 108 d'un même parc.

Cette clé de session est chargée dans les terminaux 102, 104, 106, 108 à la constitution du parc, lors d'une étape d'initialisation de ces terminaux. Dans un mode préféré de réalisation cette clé de session est chargée par l'opérateur dans la carte à puce du terminal maître 102 par un message de gestion (EMM). Elle est envoyée également par l'opérateur au terminal esclave 104, 106 ou 108, par exemple par message EMM, pour être enregistrée dans la puce électronique sécurisée. Ces chargements par EMM peuvent porter sur la clé de session elle-même ou sur une donnée, typiquement secrète, servant aux deux parties pour calculer la clé de session.

La figure 9 illustre schématiquement une procédure de contrôle de l'habilitation d'un terminal esclave à exploiter le contenu numérique.

Dans l'exemple illustré par cette figure 9, une adresse @i est attribuée à chaque terminal du parc. Les terminaux 102 et 104, d'adresses respectives @0 et @1, disposent de la même clé de session K1 chargée par l'opérateur alors que le terminal 106 d'adresse @2 dispose d'une autre clé de session K2. Le terminal esclave 104 peut coopérer avec le terminal maître 102, puisqu'il peut déchiffrer le cryptogramme CW*_{K1} avec la clé K1 pour obtenir le mot de contrôle CW.

Par contre, le terminal esclave 106 disposant de la clé de session K2 ne peut pas déchiffrer le cryptogramme CM*_{K1} qui lui serait envoyé par le terminal maître 102 utilisant la clé de session K1.

Il en résulte que l'opérateur contrôle entièrement le partage de carte entre les terminaux par le contrôle de la clé de session partagée par le terminal maître 102 et les terminaux esclaves (104, 106),

### Contrôle de l'usage normal d'un terminal

Le procédé peut être utilisé par un même terminal maître pour traiter un ou plusieurs ECM. En effet, un terminal peut solliciter l'unité de gestion d'accès 4 (figure 1) pour traiter la voie ECM lui permettant d'accéder à un contenu. Il peut également solliciter cette unité de gestion d'accès 4 pour traiter simultanément plusieurs contenus, ce qui se traduit par autant de voies ECM à traiter.

L'accès simultané à plusieurs contenus par le même terminal maître 102 peut être normal. C' est le cas où un programme est constitué de plusieurs composantes telles que par exemple une condition d'accès sur l'image et le son original, une autre pour une langue différente, une autre encore pour les sous-titres pour malentendants. C'est également le cas lorsque le terminal est un terminal passerelle, c'est-à-dire un équipement servant de point d'entrée dans une même entité (un même foyer par exemple) et fédérant les accès de plusieurs terminaux aux contenus distribués.

Par contre, l'accès simultané à plusieurs contenus par le même terminal maître 102 peut être utilisé pour détourner un accès officiel et multiplier l'accès à des contenus sans autorisation.

Une solution pour détecter ce détournement, consiste à observer, pendant une période donnée, le nombre et le type de requêtes formulées auprès de l'unité de gestion d'accès 4 par un même terminal maître 102, et diagnostiquer, selon le contexte, si ce terminal est ou non frauduleusement utilisé.

L'observation du type de requête permet de déterminer, notamment, si le terminal maître 102 soumet à traitement la même voie ECM ou plusieurs voies ECM, et dans ce dernier cas si ces voies ECM sont corrélées, c'est-à-dire, relatives au même programme, ou indépendantes, c'est-à-dire, relatives à des programmes différents. Il en est de même du constat que le terminal maître répète des requêtes d'accès à un contenu dont il n'a pas normalement les droits d'accès.

Le nombre de requêtes ainsi relevées, selon leur type, est comparé à un seuil au-delà duquel l'unité de gestion d'accès 4 diagnostique qu'il s'agit d'une tentative de piratage et prend les mesures en conséquence, telles que l'arrêt de transmission, à ce terminal, des données permettant l'accès aux contenus

La comptabilisation des requêtes, la prise en compte des types de requêtes, la détermination de la période d'observation, l'ajustement du seuil sont modulables en fonction de la permissivité ou la sévérité qu'on veut donner à ce contrôle.

Le contrôle par le terminal maître de l'usage normal d'un terminal esclave peut également être effectué selon la même procédure.

Dans les modes de réalisation décrits ci-dessus, dès lors que le terminal ne peut pas traiter un ECM pour en extraire les mots de contrôle, il envoie cet ECM à l'unité de gestion 4 ou au terminal maître 102 pour obtenir ces mots de contrôle permettant de déchiffrer le contenu. Comme cela a été décrit précédemment, ce transfert/traitement d'ECM est effectué occasionnellement ou à chaque cryptopériode.

Pour que le terminal dispose des mots de contrôle à temps pour désembrouiller le contenu, la durée globale du transfert/traitement d'ECM par l'unité de gestion 4 ou par le terminal maître 102, vu du terminal de réception, doit être inférieure à la longueur d'une cryptopériode.

Cette condition sur la durée globale du transfert/traitement permet le fonctionnement correct de l'ensemble du système lors de l'accès « simple » à un contenu, c'est à dire à vitesse normale avec une cryptopériode de l'ordre d'une dizaine de secondes telle que pratiqué usuellement.

Cependant il est d'autres cas d'utilisation dans lesquels cette condition sur la durée globale de transfert/traitement peut ne pas techniquement être satisfaite, ce qui conduit à une discontinuité, voire une impossibilité de désembrouillage.

Dans un premier exemple, des fonctions telles que la relecture d'un contenu enregistré dans le terminal (PVR) ou dans le réseau (nPVR), ou des services tels que la VOD (Video On Demand) peuvent offrir à l'utilisateur la possibilité de recevoir un contenu à des vitesses plus élevées que la normale, en avant ou en arrière (« trick modes »). Lors d'un accès rapide avant ou arrière, la fréquence apparente des ECM dans le contenu augmente et la durée de cryptopériode apparente diminue. Il en résulte que l'intervalle de temps entre deux soumissions d'ECM par le terminal de réception à l'unité de gestion ou au terminal maître diminue. Au-delà d'une certaine vitesse d'accès au contenu, la durée entre deux soumissions d'ECM peut être plus courte que la curée globale de transfert/traitement d'un ECM. Le système diverge et ne fonctionne plus.

Dans un autre exemple, afin de renforcer la protection du contenu, l'opérateur peut diminuer la longueur de la cryptopériode pour accélérer le renouvellement des mots de contrôle et ainsi augmenter la difficulté d'une attaque par force brute sur les cryptogrammes des mots de contrôle ou sur le contenu embrouillé. Au-delà d'une certaine diminution de la cryptopériode, la durée entre deux soumissions d' ECM devient plus courte que la durée globale de transfert/traitement d'un ECM. Comme dans l'exemple précédent, le système diverge et ne fonctionne plus.

### Utilisation du procédé en accès rapide avant ou arrière.

Afin de pallier à cet inconvénient de divergence et de dysfonctionnement du système dans des utilisations particulières, une solution consiste à réduire la fréquence de soumission des ECM par le terminal de réception à l'unité de gestion 4 ou au terminal maître 102, tout en conservant une partie du contrôle de l'accès par ceux-ci. On exploite ainsi la caractéristique du procédé selon laquelle les ECM sont envoyés occasionnellement par le terminal de réception à l'unité de gestion ou au terminal maître.

Le principe de cette solution consiste à découper la durée du contenu en segments temporels pendant chacun desquels le terminal de réception peut traiter les ECM sans faire appel à l'unité de gestion ou au terminal maître. Toutefois, lors du passage d'un segment à un autre, le terminal de réception doit faire appel à l'unité de gestion ou au terminal maître pour disposer des informations, typiquement la clé nécessaire au déchiffrement des mots de contrôle ou les titres d'accès satisfaisant le critère d'accès au contenu, lui permettant de traiter les ECM pendant ce nouveau segment.

Préférentiellement, le terminal doit faire appel à l'unité de gestion ou au terminal maître pour obtenir la clé de déchiffrement des mots de contrôle pour le segment temporel à venir, ce qui conduit à ce qu'il satisfasse toujours la condition d'accès, soit en disposant des titres d'accès nécessaires, soit en ne contrôlant pas cette condition.

Cette solution est applicable dans diverses utilisations telles que présentées plus haut et elle est décrite ci-après dans le cas des accès avant et arrière rapides à un contenu par un terminal de réception ccnnecté à une unité de gestion (4).

A cet effet, lorsque le contenu est fourni au terminal de réception 6 par un opérateur auquel est associée une unité de gestion d'accès 4, le procédé comporte une phase de conditionnement du contenu par l'opérateur et une phase d'exploitation dudit contenu par le terminal de réception.

La phase de conditionnement du contenu comporte les étapes suivantes :
a) la durée dudit contenu est découpée en N segments temporels à chacun desquels sont associés un identifiant Sⱼ, une clé Kⱼ et une donnée Dⱼ relative à cette clé, chaque segment Sⱼ comportant un nombre entier Mⱼ de crypto-périodes CPᵢ pour i= 1 à Mⱼ,
b) le contenu est embrouillé en utilisant des mots de contrôle CW_{i,j} pour i= 1 à Mⱼ et j= 1 à N,
c) chaque mot de contrôle CW_{i,j} est chiffré par la clé Kⱼ,
d) puis le contenu, pendant chaque segment temporel Sⱼ, est transmis embrouillé au terminal avec, à chaque cryptopériode CPᵢ, un message ECM comportant au moins le cryptogramme du mot de contrôle CW_{i,j} chiffré avec la clé courante Kⱼ, la donnée Dⱼ relative à la clé courante Kⱼ, la donnée Dⱼ₋₁ relative à la clé précédente Kⱼ₋₁ et la donnée Dⱼ₊₁ relative à la clé suivante Kⱼ₊₁.

On désigne par « segment courant » le segment Sⱼ en cours de réception par le terminal ; la clé Kⱼ associée est notée « clé courante ». On comprend qu'en accès au contenu en avant le terminal reçoit les segments successifs dans l'ordre ... Sⱼ, Sⱼ₊ᵢ, Sⱼ₊₂ ..., le segment 3ⱼ₊₁ étant le « segment suivant » du segment Sⱼ dans le contenu et utilisant la « clé suivante » Kⱼ₊₁, alors qu'en accès au contenu en arrière le terminal reçoit les segments successifs dans l'ordre ... Sⱼ, Sⱼ₋₁, Sⱼ₋₂ ..., le segment Sⱼ₋₁ étant le « segment précédent » du segment Sⱼ dans le continu et utilisant la « clé précédente » Kⱼ₋₁.

La phase d'exploitation du contenu met en oeuvre trois doublets pour la mémorisation desquels le terminal a été préalablement configuré. Ces doublets (K_{c}, D_{c}), (Kₚ, Dₚ), (Kₛ, Dₛ) sont constitués respectivement d'une clé courante K_{c} et d'une donnée D_{c} relative à cette clé, d'une clé précédente Kₚ et d'une donnée relative Dₚ, et d'une clé suivante Kₛ et d'une donnée relative Dₛ.

La phase d'exploitation comprend les étapes suivantes, à la réception de chaque message ECM :
e) Le terminal analyse la donnée Dⱼ contenue dans le message ECM et en évalue la correspondance aux données dont il dispose dans les doublets.
f) Si la donnée Dⱼ contenue dans le message ECM correspond à la donnée D_{c} préalablement mémorisée dans le terminal, le terminal déchiffre les mots de contrôle CW_{i,j} avec la clé K_{c} associée, dans le doublet correspondant, à cette donnée D_{c}. Dans ce cas aucun traitement complémentaire de l'ECM n'est à demander par le terminal à l'unité de gestion.
g) Si la donnée Dⱼ contenue dans le message ECM correspond à la donnée Dₚ, préalablement mémorisée dans le terminal, le terminal déchiffre les mots de contrôle CW_{i,j} avec la clé Kₚ associée, dans le doublet correspondant, à la donnée Dₚ. Ceci se produit en lecture arrière d'un contenu lors du passage au segment précédent. De la même façon si la donnée Dⱼ contenue dans le message ECM correspond à la donnée Dₛ, le terminal déchiffre les mots de contrôle CW_{i,j} avec la clé Kₛ. Ceci se produit en lecture avant d'un contenu lors du passage au segment suivant.
h) Enfin, si la donnée Dⱼ contenue dans le message ECM ne correspond pas à la donnée D_{c} préalablement mémorisée dans le terminal, le terminal envoie le message ECM reçu à l'unité de gestion d'accès (4) qui détermine la clé courante Kⱼ à partir de la donnée Dⱼ, la clé précédente Kⱼ₋₁ à partir de la donnée Dⱼ₋₁ et la clé suivante Kⱼ₊₁ à partir de la donnée Dⱼ₊₁ et envoie ces clés et leurs données relatives au terminal, qui mémorise leurs valeurs respectivement comme nouvelles valeurs des clés K_{c}, Kₚ et Kₛ et des données D_{c}, Dₚ et Dₛ relatives à ces clés. Ceci se produit à chaque passage d' un segment à l'autre d' un même contenu, en lecture avant comme en lecture arrière, lors du passage d'un contenu à un autre et lorsque le terminal vient d'être initialisé et que les trois doublets n'ont pas encore été mis à jour.

Conformément au problème posé, la combinaison des étapes f), g) et h) permet de compenser une durée globale de transfert/traitement excessive par rapport à la cryptopériode, tout en conservant un contrôle de l'accès au contenu par l'unité de gestion. En effet, la présence dans le terminal de la clé courante K_{c} lui permet de déchiffrer les mots de contrôle sans faire appel à l'unité de gestion. Cependant cette clé n'est valide que pendant la durée du segment courant (étape f, utilisation de la clé courante). A la fin du segment le terminal doit prendre en compte une autre clé de déchiffrement. Pour pouvoir désembrouiller le contenu sans discontinuité, le terminal dispose déjà de cette nouvelle clé (étape g, utilisation de la clé précédente ou de la clé suivante). Toutefois, pour qu'à la fin de ce nouveau segment le terminal puisse toujours désembrouiller sans discontinuité, il doit faire appel à l'unité de gestion pour traiter l'ECM qui lui permettra de mettre son système de clés à jour (étape h). A réception de l'ECM suivant cette mise à jour, il se recentrera alors sur sa nouvelle clé courante (retour à l'étape f). Ainsi, le désembrouillage se poursuit même si la fourniture des clés par l'unité de gestion a une durée supérieure à la cryptopériode, et l'unité de gestion conserve le contrôle de l'accès au contenu puisque le terminal doit y faire appel une fois au cours de chacun des segments.

On comprend ainsi que le terminal doit satisfaire la condition d'accès, soit en disposant des titres d'accès, soit en ignorant cette condition, car dans le cas contraire il solliciterait l'unité de gestion à chaque ECM ce qui conduirait à la divergence du système citée plus haut. On note en outre que l'unité de gestion, quand elle reçoit un ECM pour déterminer les clés du terminal, peut vérifier comme dans le procédé de base que le terminal dispose effectivement des titres d'accès satisfaisant les critères d'accès et non des titres d'accès illicites.

Selon une caractéristique de l'invention, le terminal renvoie ledit message ECM reçu à l'unité de gestion d'accès 4 via une liaison point-à-point.

Les clés courante Kⱼ, précédente Kⱼ₋₁ et suivante Kⱼ₊₁ dont le terminal doit disposer dans ses doublets selon la solution sont déterminées à partir des données relatives à ces clés présentes dans l'ECM.

Dans un, premier mode de réalisation, les données relatives aux clés transmises dans l'ECM comprennent au moins les cryptogrammes respectifs desdites clés Kⱼ, Kⱼ₋₁ et Kⱼ₊₁ pouvant être déchiffrés par une clé de gestion connue exclusivement de l'unité de gestion 4.

Dans un deuxième mode de réalisation, les données relatives aux clés transmises dans L'ECM comprennent au moins les identifiants Sⱼ, Sⱼ₋₁ et Sⱼ₊₁ des segments correspondants. Lorsque les données relatives ne comprennent pas les cryptogrammes desdites clés, les clés Kⱼ, Kⱼ₋₁ et Kⱼ₋₁ sont respectivement déterminées par l'unité de gestion 4 à partir de ces identifiants de segments.

Dans une première mise en oeuvre de ce mode de réalisation, l'unité de gestion d'accès 4 détermine les nouvelles clés Kⱼ, Kⱼ₋₁ et Kⱼ₊₁ par recherche dans une base de données prédéfinie à partir des identifiants de segments.

Dans un autre mode de mise en oeuvre, l'unité de gestion d'accès 4 détermine les nouvelles clés Kⱼ, Kⱼ₋₁ et Kⱼ₋₁ par diversification d' une clé racine à partir des identifiants de segments.

Lors des étapes e) à h), le terminal évalue la correspondance entre la donnée relative reçue Dⱼ et les données D_{c}, Dₚ et Dₛ dont il dispose dans ses doublets. Préférentiellement, cette correspondance porte sur l'égalité des identifiants de segments. Quand les identifiants de segments ne sont pas mis en oeuvre, la recherche de correspondance consiste à comparer les cryptogrammes des clés.

Dans un troisième mode de réalisation seule la donnée Dⱼ relative à la clé courante Kⱼ est présente dans le message ECM, et l'unité de gestion d'accès 4 déduit de cette donnée les deux autres données Dⱼ₋₁ et Dⱼ₊₁ relatives aux clés précédente Kⱼ₋₁, et suivante Kⱼ₊₁ Dans un premier exemple, les données relatives aux clés sont des identifiants de segments de valeurs numériques successives ... X-2, X-1, X, X+1, X-2 .... Dans un autre exemple, les données relatives aux clés sont les cryptogrammes de ces clés et l'unité de gestion dispose à l'avance de la liste de ces cryptogrammes ordonnée selon l'ordre de succession des segments. Quand le cryptogramme de la clé Kⱼ est trouvé dans cette liste, le cryptogramme qui le précède est celui de la clé Kⱼ₋₁ et le cryptogrammes qui le suit est celui de la clé Kⱼ₊₁.

En variante, si la lecture en arrière d'un contenu n'est pas mise en oeuvre, la donnée Dⱼ₋₁. relative à la clé précédente Kⱼ₋₁, n'est pas mise en oeuvre dans les messages ECM et le doublet (Kₚ, Dₚ) correspondant au segment précédent peut être supprimé tout en restant dans le cadre de la solution.

En variante, le doublet (Kₚ, Dₚ) correspondant au segment précédent peut être remplacé par plusieurs doublets associés aux nₚ segments précédents successifs et le doublet (Kₛ, Dₛ) correspondant au segment suivant peut être remplacé par plusieurs doublets associés aux nₛ segments suivants successifs, tout en restant dans le cadre de l'invention. Cette extension des doublets permet à la solution de s'appliquer même lors d'accès au contenu à une vitesse telle que le délai global de transfert/traitement de l'ECM devient supérieur à la durée apparente d' un ou de plusieurs segments successifs. Le nombre de doublets précédents nₚ ou suivants nₛ dépend alors de la vitesse maximale d'accès au contenu qu'on veut pouvoir atteindre.

La solution décrite ci-dessus peut également être mise en oeuvre lorsque le contenu embrouillé est distribué à un parc de terminaux récepteurs comprenant un terminal maître (102) et au moins un terminal esclave (104, 106, 108) dépendant dudit terminal maître (102). Dans ce cas le terminal de réception est remplacé par le terminal esclave et, vu du terminal esclave, l'unité de gestion est remplacée par le terminal maître.

Dans un mode de réalisation, le traitement de l'ECM, envoyé par le terminal esclave au terminal maître pour obtenir les nouvelles valeurs des doublets (K_{c}, D_{c}), (Kₚ, Dₚ), (Kₛ, Dₛ), est effectué par le terminal maître lui-même qui dispose de moyens similaires à ceux d'une unité de gestion tels que, selon la mise en oeuvre, une fonction de diversification de clé racine, une fonction de déchiffrement par une clé de gestion, une base de données des cryptogrammes.

Dans un autre mode de réalisation, le terminal maître (102) détermine les nouvelles valeurs des doublets (K_{c}, D_{c}), (Kₚ, Dₚ), (Kₛ, Dₛ) à envoyer au terminal esclave en envoyant pour traitement le message ECM qu'il reçoit à une unité de gestion (4) ou à un terminal maître dont il dépend et vis à vis de laquelle / duquel il se comporte comme un terminal esclave.

La solution préférée décrite plus haut consiste à associer une clé différente à un segment, la condition d'accès étant toujours satisfaite ou ignorée par le terminal. Cette solution se transpose à l'évidence au cas où une condition d'accès différente est associée à chaque segment, la clé de déchiffrement étant inchangée et disponible dans le terminal. Dans ce cas, les données Dj sont relatives à des droits et l'unité de gestion fournit au terminal, au lieu des clés, les droits nécessaires à l'accès aux segments courant, suivant et précédent.

## Revendications

1. Procédé de contrôle d'accès à un contenu embrouillé fourni à un terminal de réception (6) par un opérateur coopérant avec une unité de gestion d'accès (4), ledit terminal (6) étant muni d'au moins un module de contrôle d'accès (10), procédé comportant les étapes suivante :
- associer au contenu une pluralité d'informations nécessaires au désembrouillage dudit contenu,
- transmettre ledit contenu avec ladite pluralité d'informations audit terminal (6), et,
à la réception de ladite pluralité d'informations par le terminal (6),
- renvoyer systématiquement ou occasionnellement au moins une information parmi ladite pluralité d'informations à l'unité de gestion d'accès (4) via une liaison point-à-point (12),
- vérifier par l'unité de gestion d'accès (4) si l'information renvoyée est compatible avec des droits d'accès préalablement alloués audit terminal (6),
- transmettre au terminal au moins un paramètre de commande pour permettre l'utilisation du contenu si l'information renvoyée est compatible avec les droits d'accès préalablement alloués audit terminal (6),
- Sinon, l'unité de gestion (4) ne transmet pas ledit paramètre du terminal (6)
procédé dans lequel le paramètre de commande envoyé par l'unité de gestion d'accès (4) au terminal (6) est un message ECM_{R} destiné à être enregistré avec le contenu et comportant des critères d'accès destinés au contrôle de la réutilisation dudit contenu.

2. Procédé selon la revendication 1, dans lequel la pluralité d'informations nécessaires au désembrouillage du contenu est transmise au terminal (6) dans un message ECM comportant au moins un critère d'accès CA, un cryptogramme CW* _{Kecm} d'un mot de contrôle CW chiffré par une clé K_{ecm}.

3. Procédé selon la revendication 1, dans lequel le contenu fourni au terminal (6) est protégé par une licence DRM.

4. Système de contrôle d'accès comportant un dispositif d'émission (2) comprenant un serveur de contenu (8), une unité de gestion d'accès (4) associée audit dispositif d'émission (2), un terminal de réception (6) muni d'au moins un module de contrôle d'accès (10) à un contenu embrouillé transmis par ledit serveur (8) et auquel est associée une pluralité d'informations nécessaires au désembrouillage dudit contenu, ledit terminal de réception (6) étant relié à ladite unité de gestion d'accès (4) par une liaison point à point (12), ledit module de contrôle d'accès (10) étant adapté pour renvoyer, systématiquement ou occasionnellement à ladite unité de gestion d'accès (4) au moins une information contenue dans la pluralité d'informations nécessaires au désembrouillage du contenu, et en ce que ladite unité de gestion d'accès (4) est adaptée pour vérifier si l'information renvoyée est compatible avec des droits d'accès préalablement alloués audit terminal (6), et pour transmettre au terminal (6) au moins un paramètre de commande pour permettre l'utilisation du contenu si l'information renvoyée est compatible avec les droits d'accès préalablement alloués audit terminal (6), ou pour ne pas transmettre ledit paramètre au terminal si l'information renvoyée n'est pas compatible avec les droits d'accès préalablement alloués audit terminal (6),
système dans lequel le paramètre de commande envoyé par l'unité de gestion d'accès (4) au terminal (6) est un message ECM_{R} destiné à être enregistré avec le contenu et comportant des critères d'accès destinés au contrôle de la réutilisation dudit contenu.

5. Système selon la revendication 4 dans lequel la pluralité d'informations nécessaires au désembrouillage du contenu est transmise au terminal (6) dans un message ECM comportant au moins un critère d'accès CA, un cryptogramme CW* _{Kecm} d'un mot de contrôle CW chiffré par une clé K_{ecm}.

6. Système selon la revendication 5, dans lequel ladite unité de gestion d'accès (4) est distincte du dispositif d'émission (2).

7. Système selon la revendication 5, dans lequel ladite unité de gestion d'accès (4) est intégrée au dispositif d'émission (2).

8. Terminal de réception (6) d'un contenu embrouillé transmis avec une pluralité d'informations nécessaires au désembrouillage dudit contenu, ledit terminal étant relié à une unité de gestion d'accès (4) via une liaison point-à-point (12) et comportant un module de contrôle d'accès (10) comprenant des moyens pour renvoyer systématiquement ou occasionnellement au moins une information de ladite pluralité d'informations nécessaires au désembrouillage dudit contenu à l'unité de gestion d'accès (4) via la liaison point-à-point (12) de manière à permettre à ladite unité de gestion d'accès (4) de vérifier si l'information renvoyée est compatible avec des droits d'accès préalablement alloués audit terminal (6), et de transmettre au terminal (6) au moins un paramètre de commande pour permettre l'utilisation du contenu si l'information renvoyée est compatible avec les droits d'accès préalablement alloués audit terminal (6), ou pour ne pas transmettre ledit paramètre au terminal si l'information renvoyée n'est pas compatible avec les droits d'accès préalablement alloués audit terminal (6),
ledit paramètre de commande transmis par l'unité de gestion d'accès (4) au module de contrôle d'accès (10) est un message ECM_{R} destiné à être enregistré avec le contenu et comportant des critères d'accès destinés au contrôle de la réutilisation dudit contenu.

9. Programme d'ordinateur mémorisé sur un support d'enregistrement et comportant des instructions destinés à la mise en oeuvre d'un procédé de contrôle d'accès selon la revendication 1 lorsqu'il est exécuté sur un ordinateur.

10. Procédé de contrôle d'accès selon la revendication 1 dans lequel le contenu embrouillé est distribué à un parc de terminaux récepteurs et dans lequel l'unité de gestion d'accès (4) est un terminal maître parmi les terminaux du parc de terminaux récepteurs et le terminal de réception (6) est un terminal esclave parmi les terminaux du parc de terminaux récepteurs.

11. Procédé selon la revendication 10, dans lequel ladite pluralité d'informations nécessaires au désembrouillage dudit contenu est transmise dans un message ECM comportant au moins un critère d'accès CA et un cryptogramme CW*_{Kecm} d'un mot de contrôle CW chiffré par une clé K_{ecm}.

12. Procédé selon la revendication 11, dans lequel le terminal esclave (104, 106, 108) renvoie au moins le cryptogramme CW*_{Kecm} au terminal maître (102).

13. Système de contrôle d'accès selon la revendication 4 dans lequel le contenu embrouillé est distribué à un parc de terminaux récepteurs et dans lequel l'unité de gestion d'accès (4) est un terminal maître parmi les terminaux du parc de terminaux récepteurs et le terminal de réception (6) est un terminal esclave parmi les terminaux du parc de terminaux récepteurs.

14. Système selon la revendication 13, dans lequel ledit terminal maître (4, 102) est intégré au dispositif d'émission (2).

15. Système selon la revendication 16, dans lequel ledit terminal maître est intégré à une antenne de réception collective.

16. Système selon la revendication 13 dans lequel ledit terminal maître remplit une fonction de passerelle entre le serveur de contenu (8) et les terminaux esclaves (6, 104, 106, 108) du parc.

17. Programme d'ordinateur selon la revendication 9 dans lequel le contenu embrouillé est distribué à un parc de terminaux récepteurs et dans lequel l'unité de gestion d'accès (4) est un terminal maître parmi les terminaux du parc de terminaux récepteurs et le terminal de réception (6) est un terminal esclave parmi les terminaux du parc de terminaux récepteurs.

## Claims

1. Method for access control to a scrambled content supplied to a reception terminal (6) by an operator cooperating with an access management unit (4), said terminal (6) being provided with at least one access control module (10), method comprising the following steps:
associating the content with a plurality of information necessary for descrambling said content,
transmitting said content with said plurality of information to said terminal (6),
on reception of said plurality of information by the terminal (6),
systematically or occasionally send at least one item of information among said plurality of information to the access management unit (4) through a point-to-point link (12),
- use the access management unit (4) to verify whether or not the information sent is compatible with access rights previously allocated to said terminal (6),
- transmit at least one command parameter to the terminal to enable use of the content if the information sent is compatible with access rights previously allocated to said terminal (6).
- otherwise, the management unit (4) does not transmit said parameter to the terminal (6),
process in which the command parameter sent by the access management unit (4) to the terminal (6) is an ECM_{R} message that will be recorded with the content and comprising access criteria that will be used to control reuse of said content.

2. Method according to claim 1, in which the plurality of information necessary for descrambling the content is sent to the terminal (6) in an ECM message comprising at least one access criterion CA, a cryptogram CW*_{Kecm} of a control word encrypted by a key K_{ecm}.

3. Method according to claim 1, in which the content supplied to the terminal (6) is protected by a DRM license.

4. Access control system comprising an emission device (2) comprising a content server (8), an access management unit (4) associated with said emission device (2), a reception terminal (6) provided with at least one access control module (10) controlling access to a scrambled content transmitted by said server (8) and with which a plurality of information necessary for descrambling said content is associated, said reception terminal (6) being connected to said access management unit (4) through a point-to-point link (12), said access control module (10) being adapted to systematically or occasionally return at least one item of information contained in the plurality of information necessary for descrambling said content to said access management unit (4), and in that said access management unit (4) is adapted to verify if the returned information is compatible with the access rights previously allocated to said terminal (6), and to send at least one command parameter to said terminal (6) to enable use of the content if the returned information is compatible with the access right previously allocated to said terminal (6), or not send said parameter to the terminal if the returned information is not compatible with the access rights previously allocated to said terminal (6),
system in which the command parameter sent by the access s management unit (4) to the terminal (6) is an ECM message to be recorded with the content and comprises access criteria that will be used to control reuse of said content.

5. System according to claim 4, in which the plurality of information necessary for descrambling the content is sent to the terminal (6) in an ECM message comprising at least one access criterion CA and a cryptogram CW*_{Kecm} of a control word CW encrypted by a key K_{ecm}.

6. System according to claim 5, in which said access management unit (4) is distinct from the emission device (2).

7. System according to claim 5, in which said access management unit (4) is integrated into the emission device (2).

8. Reception terminal (6) for reception of a scrambled content transmitted with a plurality of information necessary for descrambling said content, said terminal being connected to an access management unit (4) through a point-to-point link (12) and comprising an access control module (10) including means of systematically or occasionally returning at least one item of information among said plurality of information necessary for descrambling said content to said access management unit (4) through the point-to-point link (12) to enable said access management unit (4) to verify if the returned information is compatible with the access rights previously allocated to said terminal (6), and to send at least one command parameter to said terminal (6) to enable use of the content if the returned information is compatible with the access rights previously allocated to said terminal (6), or not send said parameter to the terminal if the returned information is not compatible with the access rights previously allocated to said terminal (6),
said control parameter transmitted by the access management unit (4) to the access control module (10) is an ECM_{R} message that will be recorded with the content and comprises access criteria that will be used to control reuse of said content.

9. Computer program stored on a storage medium and comprising instructions for the use of an access control method according to claim 1 when it is run on a computer.

10. Access control method according to claim 1, in which the scrambled content is distributed to a set of reception terminals and in which the access management unit (4) is a master terminal among the complete set of reception terminals and the reception terminal (6) is a slave terminal among the complete set of reception terminals.

11. Method according to claim 10, in which said plurality of information necessary for descrambling said content is sent in an ECM message comprising at least one access criterion CA and a cryptogram CW*K_{ecm} of a control word encrypted by a key K_{ecm}.

12. Method according to claim 11, in which the slave terminal (104, 106, 108) returns at least the cryptogram CW*_{Kecm} to the master terminal (102).

13. Access control method according to claim 4, in which the scrambled content is distributed to a set of reception terminals and in which the access management unit (4) is a master terminal among the complete set of reception terminals and the reception terminal (6) is a slave terminal among the complete set of reception terminals.

14. System according to claim 13, in which said master terminal (4, 102) is integrated into the emission device (2).

15. System according to claim 13, in which said master terminal is integrated into a collective reception antenna.

16. System according to claim 13, in which said master terminal performs a bridge function between the content server (8) and the complete set of slave terminals (6, 104, 106, 108).

17. Computer program according to claim 9 in which the scrambled content is distributed to a set of reception terminals and in which the access management unit (4) is a master terminal among the complete set of reception terminals and the reception terminal (6) is a slave terminal among the complete set of reception terminals.

## Patentansprüche

1. Verfahren zur Kontrolle des Zugriffs auf einen verwürfelten Inhalt, geliefert an ein Empfangsendgerät (6) durch einen mit einer Zugriffsverwaltungseinheit (4) kooperierenden Operator, wobei das genannte Terminal (6) mit wenigstens einem Zugriffskontrollmodul (10) ausgestattet ist und das Verfahren folgende Schritte umfasst, darin bestehend:
- dem Inhalt eine Vielzahl zur Entwürfelung des genannten Inhalts notwendiger Informationen zuzuordnen,
- den genannten Inhalt mit der genannten Vielzahl von Informationen zum genannten Endgerät (6) zu übertragen, und,
beim Empfang der genannten Vielzahl von Informationen durch das Endgerät (6),
- systematisch oder sporadisch wenigstens eine Information aus der Vielzahl von Informationen über eine Direktverbindung (12) an die Zugriffsverwaltungseinheit (4) zurückzusenden,
- durch die Zugriffsverwaltungseinheit (4) zu verifizieren, ob die zurückgesandte Information mit Zugriffsrechten kompatibel ist, die dem genannten Endgerät (6) zuvor gewährt worden sind,
- wenigstens einen Steuerparameter zum Endgerät zu übertragen, um die Nutzung des Inhalts zu ermöglichen, wenn die zurückgesendete Information mit den zuvor dem genannten Endgerät (6) gewährten Zugriffsrechten kompatibel ist,
- andernfalls die Verwaltungseinheit (4) den genannten Parameter nicht zum Endgerät (6) überträgt,
wobei in diesem Verfahren der durch die Zugriffsverwaltungseinheit (4) an das Endgerät (6) gesendete Steuerparameter eine Mitteilung ECM ist, die dazu bestimmt ist, mit dem Inhalt gespeichert zu werden und die für die Kontrolle der Weiternutzung des genannten Inhalts bestimmte Zugriffskriterien umfasst.

2. Verfahren nach Anspruch 1, bei dem die Vielzahl zur Entwürfelung des Inhalts notwendiger Informationen in einer Mitteilung ECM zum Endgerät (6) übertragen wird, die wenigstens ein Zugriffskriterium CA umfasst, ein Kryptogramm CW*_{Kecm} eines Kontrollworts CW, verschlüsselt durch einen Schlüssel K_{ecm}.

3. Verfahren nach Anspruch 1, bei dem der an das Endgerät (6) gelieferte Inhalt durch eine DRM-Lizenz geschützt ist.

4. Zurgriffskonfrollsystem umfassend eine Sendevorrichtung (2) mit einem Inhaltsserver (8), einer der genannten Sendevorrichtung (2) zugeordnete Zugriffsverwaltungseinheit (4), ein Empfangs-Endgerät (6), versehen mit wenigstens einem Modul (10) zur Kontrolle des Zugriffs auf einen verwürfelten Inhalt, der übertragen wird durch den genannten Server (8) und dem eine Vielzahl zur Entwürfelung des genannten Inhalts notwendiger Informationen zugeordnet ist, wobei das genannte Empfangs-Endgerät (6) mit der Zugriffsverwaltungseinheit (4) durch eine Direktverbindung (12) verbunden ist, der genannte Zugriffskantrollmoduf (10) angepasst ist, um systematisch oder sporadisch wenigstens eine in der Vielzahl zur Entwürfelung notwendiger Informationen enthaltene Information zu der genannten Zugriffsverwaltungseinheit (4) zurückzusenden, und dass die genannte Zugriffsverwaltungseinheit (4) angepasst ist, um zu verifizieren, ob die zurückgesendete Information kompatibel ist mit den dem genannten Endgerät (6) zuvor gewährten Zugriffsrechten, und um wenigstens einen Steuerparameter zum Endgerät (6) zu übertragen, um die Nutzung des Inhalts zu ermöglichen, wenn die zurückgesendete Information kompatibel ist mit den dem genannten Endgerät (6) zuvor gewährten Zugriffsrechten, oder um den genannten Parameter nicht an das Endgerät zu senden, wenn die zurückgesendete Information nicht kompatibel ist mit den dem genannten Endgerät (6) zuvor gewährten Zugriffsrechten,
wobei bei diesem System der durch die Zugriffsverwaltungseinheit (4) an das Endgerät (6) gesandte Steuerparameter eine Mitteilung ECM_{R} ist, die dazu bestimmt ist, mit dem Inhalt gespeichert zu werden und die für die Kontrolle der Weiternutzung des genannten Inhalts bestimmte Zugriffskriterien umfasst.

5. System nach Anspruch 4, bei dem die zur Entwürfelung des Inhalts notwendige Vielzahl von Informationen in einer Mitteilung ECM zum Endgerät übertragen wird, die wenigstens ein Zugriffskriterium CA umfasst, ein Kryptogramm CW*_{Kecm} eines Kontrollworts CM, verschlüsselt durch einen Schlüssel K_{ecm}.

6. System nach Anspruch 5, bei dem die genannte Zugriffsverwaltungseinheit (4) von der Sendevorrichtung (2) getrennt ist.

7. System nach Anspruch 5, bei dem die genannte Zugriffsverwaltungseinheit (4) in die Sendevorrichtung (2) integriert ist.

8. Empfangs-Endgerät (6) eines verwürfelten Inhalts, übertragen mit einer Vielzahl zur Entwürfelung des genannten Inhalts notwendiger Informationen, wobei das genannte Endgerät über eine Direktverbindung (12) mit einer Zugriffsverwaltungseinheit (4) verbunden ist und einen Zugriffskontrollmodul (10) mit Einrichtungen umfasst, um systematisch oder sporadisch wenigstens eine Information aus der zur Entwürfelung des genannten Inhalts notwendigen Vielzahl von Informationen über die Direktverbindung (12) zur Zugriffsverwaltungseinheit (4) zurückzusenden, um der genannten Zugriffsverwaltungseinheit (4) zu ermöglichen, zu verifizieren, ob die zurückgesendete Information kompatibel ist mit den dem genannten Endgerät (6) zuvor gewährten Zugriffsrechten, und zum Endgerät (6) wenigstens einen Steuerparameter zu übertragen, um die Nutzung des Inhalts zu gestatten, wenn die zurückgesendete Information kompatibel ist mit den dem Endgerät (6) zuvor gewährten Zugriffsrechten, oder um den genannten Parameter nicht an das Endgerät zu senden, wenn die zurückgesendete Information nicht kompatibel ist mit den dem genannten Endgerät (6) zuvor gewährten Zugriffsrechten,
wobei der genannte durch die Zugriffsverwaltungseinheit (4) zum Zugriffskontrollmodul (10) übertragene Steuerparameter eine Mitteilung ECM_{R} ist, die dazu bestimmt ist, mit dem Inhalt gespeichert zu werden und die für die Kontrolle der Weiternutzung des genannten Inhalts bestimmte Zugriffskriterien umfasst.

9. Computerprogramm, gespeichert auf einem Aufzeichnungsträger und Befehle umfassend, die dazu bestimmt sind, ein Zugriffskontrollverfahren nach Anspruch 1 anzuwenden, wenn es in einem Computer ausgeführt wird.

10. Zugriffskontrollverfahren nach Anspruch 1, bei dem der verwürfelte Inhalt an einen Bestand von Empfangsendgeräten geliefert wird und bei dem die Zugriffsverwaltungseinheit (4) ein Master-Endgerät unter den Endgeräten des Empfangsendgerätebestands ist, und das Empfangsendgerät (6) ein Slave-Endgerät unter den Endgeräten des Empfangsendgerätebestands ist.

11. Verfahren nach Anspruch 10, bei dem die genannte Vielzahl zur Entwürfelung des genannten Inhalts notwendiger Informationen in einer Mitteilung ECM enthalten ist, die wenigstens ein Zugriffskriterium CA und ein Kryptogramm CW*_{Kecm} eines durch einen Schlüssel K_{ecm} verschlüsselten Kontrollworts umfasst.

12. Verfahren nach Anspruch 11, bei dem das Slave-Endgerät (104, 106, 108) mindestens ein Kryptogramm CW*_{Kecm} zum Master-Endgerät (102) zurücksendet.

13. Zugriffskontrollsystem nach Anspruch 4, bei dem der verwürfelte Inhalt an einen Bestand von Empfangsendgeräten geliefert wird, und bei dem die Zugriffsverwaltungseinheit (4) ein Master-Endgerät unter den Endgeräten des Empfangsendgerätebestands ist, und das Empfangsendgerät (6) ein Slave-Endgerät unter den Endgeräten des Empfangsendgerätebestands ist.

14. System nach Anspruch 13, bei dem das genannte Master-Endgerät (4, 102) in die Sendevorrichtung (2) integriert ist.

15. System nach Anspruch 13, bei dem das genannte Master-Endgerät in eine Gemeinschafts-Empfangsantenne integriert ist.

16. System nach Anspruch 13, bei dem das genannte Master-Endgerät eine Brückenfunktion zwischen dem Inhaltsserver (8) und den Slave-Endgeräten (6, 104, 106, 108) des Bestands hat.

17. Computerprogramm nach Anspruch 9, bei dem der verwürfelte Inhalt an einen Bestand von Empfangsendgeräten geliefert wird und bei dem die Zugriffsverwaltungseinheit (4) ein Master-Endgerät unter den Endgeräten des Empfangsendgerätebestands ist, und das Empfangsendgerät (6) ein Slave-Endgerät unter den Endgeräten des Empfangsendgerätebestands ist.
